# EUROPÄISCHE PATENTSCHRIFT

(11) **EP 3 541 732 B1**
(45) Veröffentlichungstag und Bekanntmachung des Hinweises auf die Patenterteilung: **16.09.2020**
(21) Anmeldenummer: 17804504.3
(22) Anmeldetag: 17.11.2017
(51) Int. Cl.: B65H 1/02, G06K 13/08, G06K 13/103

(54) **VORRICHTUNG ZUM VEREINZELN UND INDIVIDUALISIEREN VON DOKUMENTKÖRPERN**
APPARATUS FOR SEPARATING AND INDIVIDUALIZING DOCUMENT BODIES
DISPOSITIF DE SÉPARATION ET D'INDIVIDUALISATION DE CORPS DE DOCUMENTS

(30) Priorität: 17.11.2016 DE 102016222694
(43) Veröffentlichungstag der Anmeldung: 25.09.2019
(73) Patentinhaber: Bundesdruckerei GmbH, 10969 Berlin (DE)
(72) Erfinder: HIRSCH, Robert, 83620 Vagen (DE); KIRSCHBAUER, Josef, 93476 Blaibach (DE)
(74) Vertreter: Obst, Bernhard
(86) Internationale Anmeldenummer: PCT/EP2017/079553
(87) Internationale Veröffentlichungsnummer: WO 2018/091636

(56) Entgegenhaltungen:
- CN-Y- 2 867 457
- DE-C- 221 230
- US-B1- 6 315 283

## Beschreibung

Die Erfindung betrifft eine Vorrichtung zum Individualisieren von Dokumentkörpern mit einer Vereinzelungseinheit zum Vereinzeln einer Vielzahl von in einem Magazin vorgehaltenen Dokumentkörpern und einer Individualisierungseinheit mit einer Dokumentaufnahme, wobei die Individualisierungseinheit derart ausgebildet ist, einen Dokumentkörper in einer Individualisierungsposition der Dokumentaufnahme zu individualisieren.

### Hintergrund der Erfindung

Im Bereich der Wert- oder Sicherheitsdokumente ist es zum Individualisieren dieser Dokumente üblich, Dokumentkörper aus einem Magazin, in dem die noch nicht individualisierten Dokumentkörper in größerer Stückzahl vorgehalten werden, einzeln zu einer Individualisierungseinheit zu transportieren, um dort einen Individualisierungsschritt durchzuführen. Der vereinzelte Dokumentkörper wird hierzu mittels einer mechanischen oder elektromechanischen Transportvorrichtung transportiert. Eine solche Transporteinrichtung umfasst eine Vielzahl von Antriebseinheiten und mechanischen Bauteilen, was dazu führt, dass ein hoher Wartungsaufwand notwendig ist.

Aus der CN 2 867 457 Y ist eine Vorrichtung für eine automatisierte elektronische Beschriftung von Chip-Karten bekannt, bei der die Chip-Karten in einem Schacht vorgehalten werden und aus diesem Schacht mittels einer Zuführeinrichtung in einen Inspektionsbereich geschoben werden. Weiter offenbart das Dokument eine Vorrichtung gemäß dem Oberbegriff des Anspruchs 1.

Die DE 221 230 C beschreibt einen Kartenausgeber, bei dem jeweils eine Adresskarte für ein Herausnehmen bereitgestellt wird. Nach dem Entnehmen der Adresskarte, wird aus einem Behälter, in dem sich ein Stapel von gleichen Adresskarten befindet, eine neue Adresskarte senkrecht in die Ausgabestellung bewegt.

Die US 6,315,283 B1 beschreibt einen Zuführbehälter und eine Codierstation für einen Kartendrucker. Am Boden eines Zuführbehälters sind Vorschubrollen vorgesehen, die eine Auflagefläche bilden, die gegenüber der einen Schachtwand geneigt ist, um ein Verkanten der Karten im Zuführbehälter zu vermeiden. Die Karten werden jeweils über Vorschubrollen aus dem Vorratsbehälter in ein Reinigungsmodul und aus diesem Reinigungsmodul in den Drucker transportiert.

Der Erfindung liegt das technische Problem zu Grunde, eine Vorrichtung zum Individualisieren von Dokumentkörpern zu schaffen, bei der ein Transport des Dokumentkörpers verbessert und insbesondere ein Wartungsaufwand reduziert ist.

Die technische Aufgabe wird erfindungsgemäß durch eine Vorrichtung mit den Merkmalen des Patentanspruchs 1 gelöst. Vorteilhafte Ausgestaltungen der Erfindung ergeben sich aus den Unteransprüchen.

### Definitionen

Als Sicherheitsdokument werden jene Gegenstände bezeichnet, die mindestens ein Sicherheitsmerkmal aufweisen. Ein Sicherheitsmerkmal ist hierbei jedes Merkmal, welches eine Nachahmung und/oder Verfälschung und/oder ein Duplizieren des Sicherheitsdokuments verhindert oder erschwert. Darüber hinaus sind Sicherheitsmerkmale auch solche Merkmale eines Sicherheitsdokuments, die eine Verifikation des Dokuments hinsichtlich seiner Echtheit und/oder einer Zuordnung zu einer Person und/oder einem Gegenstand ermöglichen. Beispielhaft sind als Sicherheitsdokumente genannt: Personalausweise, Reisepässe, ID-Karten, Zugangskontrollausweise, Visa, Steuerzeichen, Tickets, Führerscheine und Kraftfahrzeugpapiere. Solche Sicherheitsdokumente weisen typischerweise einen Dokumentkörper auf, der bei modernen Sicherheitsdokumenten aus einem oder mehreren Kunststoffmaterialien, vorzugsweise in Form einer Karte oder einer kartenartigen Seite zum Einbinden z.B. in ein Passbuch, ausgebildet sind. In den Dokumentkörper können weitere Materialien eingearbeitet sein.

Als Dokumentkörper wird hier der physische Körper eines Sicherheitsdokuments bzw. ein physischer Bestandteil eines Sicherheitsdokuments, beispielsweise bei einem Reisepass, einer auf Kunststoffbasis hergestellte Identitätsseite verstanden.

Für eine Herstellung eines Dokumentkörpers eines Sicherheitsdokuments kommt eine Vielzahl von Materialien in Betracht. Hierbei kommen sämtliche Materialien ist Frage, die sich zu einem Dokumentkörper zusammenfügen lassen. Beispielsweise können solche Materialien Fotofilme, Patches, Zellulosegewebe, Naturfasern, Textilien und andere Gewirke, beispielsweise aus Baumwolle oder sonstigen Stoffen, Metallfolien oder Kunststoffe umfassen. Bei den Kunststoffen kennt der Fachmann insbesondere Kunststoffmaterialien, welche beispielsweise auf Basis eines Polymerwerksstoffs aus der Gruppe umfassend PC (Polycarbonat), insbesondere Bisphenol-A-Polycarbonat, PET (Polyethylenterephthalat), PMMA (Polymethylmethacrylat), TPU (thermoplastische Polyurethanelastomere), PE (Polyethylen), PP (Polypropylen), PI (Polyimid), ABS (Acrylnitril-Butadien-Styrol), PVC (Polyvinylchlorid) und Kopolymeren solcher Polymere gebildet sein können. Besonders bevorzugt ist der Dokumentkörper aus einem oder mehreren Polymerschichten auf Basis der genannten Polymere ausgebildet, die beispielsweise in einem Laminationsverfahren zusammengefügt sind.

Als individualisierend wird eine Information angesehen, die einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Beispiele für nicht individualisierende Informationen sind beispielsweise ein Wappen, ein Sigel, ein Hoheitszeichen einer ausstellenden Behörde usw. Individualisieren bedeutet in diesem Zusammenhang dann das Ein- oder Aufbringen einer solchen individualisierenden Information in oder auf den Dokumentkörper des Sicherheitsdokuments.

### Grundzüge der Erfindung und besondere Ausführungsformen

Die Grundidee der Erfindung ist, Dokumentkörper, welche von einer Vereinzelungseinheit ausgegeben werden, gegenüber einer Horizontalen und einer Vertikalen geneigt auszugeben, so dass die ausgegebenen Dokumentkörper schwerkraftgetrieben über eine Gleitbahn einer Individualisierungseinheit zugeführt werden. Dies hat den Vorteil, dass auf mechanische und/oder elektromechanische Transportvorrichtungen zum Transportieren des Dokumentkörpers von der Vereinzelungseinheit zur Individualisierungseinheit verzichtet werden kann. Der Transport des Dokumentkörpers erfolgt also schwerkraftgetrieben, das heißt unter Ausnutzung einer Gewichtskraft bzw. potentiellen Energie des vereinzelten Dokumentkörpers. Die Gewichtskraft bzw. die potentielle Energie wird dann in kinetische Energie umgewandelt und kann hierdurch für den Transport ausgenutzt werden.

Insbesondere wird eine Vorrichtung zum Individualisieren von Dokumentkörpern geschaffen, umfassend eine Vereinzelungseinheit zum Vereinzeln einer Vielzahl von in einem Magazin vorgehaltenen Dokumentkörpern, und eine Individualisierungseinheit mit einer Dokumentaufnahme, wobei die Individualisierungseinheit derart ausgebildet ist, einen Dokumentkörper in einer Individualisierungsposition der Dokumentaufnahme zu individualisieren, wobei die Vereinzelungseinheit eine Ausgabeeinheit aufweist, welche derart ausgebildet ist, vereinzelte Dokumentkörper geneigt auszugeben, und die Dokumentaufnahme der Individualisierungseinheit derart zur Ausgabeeinheit positioniert ist, dass ein vereinzelt ausgegebener Dokumentkörper schwerkraftgetrieben entlang einer Gleitbahn an die Individualisierungsposition der Dokumentaufnahme der Individualisierungseinheit transportiert wird.

Es hat sich gezeigt, dass ein Transport zwischen der Vereinzelungseinheit und der Individualisierungseinheit verbessert ist, wenn die Vereinzelungseinheit und die Individualisierungseinheit mechanisch miteinander verknüpft sind. In einer Ausführungsform ist deshalb vorgesehen, dass die Vereinzelungseinheit und die Individualisierungseinheit mindestens ein Element aufweisen, das einstückig ausgebildet ist, so dass die Vereinzelungseinheit und die Individualisierungseinheit integral miteinander verbunden sind. Integral soll hierbei bedeuten, dass die Vereinzelungseinheit und die Individualisierungseinheit Bestandteile aufweisen, die einstückig ausgebildet sind und sowohl in der Vereinzelungseinheit als auch in der Individualisierungseinheit einen technischen Zweck erfüllen und deshalb beiden Einheiten zuzuordnen sind. Beispielsweise kann ein solches einstückiges Bauteil einer Verbindung zwischen den beiden Einheiten dienen. Ein solches einstückiges Bauteil ist beispielsweise die Gleitbahn, welche beide Einheiten miteinander verbindet und somit beiden Einheiten gemeinsam zuzuordnen ist.

Der Transport des Dokumentkörpers erfolgt entlang einer Gleitbahn. Von Vorteil ist es, wenn eine solche Gleitbahn insbesondere auch einer Führung des vereinzelten Dokumentkörpers dient und eine Geschwindigkeit, mit der der Dokumentkörper entlang der Gleitbahn gleitet, festlegen kann. In einer weiteren Ausführungsform ist deshalb vorgesehen, dass die Ausgabeeinheit zum Ausbilden der Gleitbahn eine Transportfläche umfasst, wobei die Transportfläche als geneigte Ebene ausgebildet ist. Eine solche geneigte Ebene ermöglicht es, eine Geschwindigkeit eines vereinzelten Dokuments über die Neigung und eine Haftreibung des Dokumentkörpers auf der Transportfläche festzulegen. Ferner erfolgt direkt eine Führung des vereinzelten Dokumentkörpers entlang der Transportfläche. Ein schwerkraftgetriebener vereinzelter Dokumentkörper wird in seiner Fallrichtung entlang der Gewichtskraft gebremst und eine kinetische Energie des Dokumentkörpers in Richtung des Abfalls der Transportfläche umgeleitet. Auf diese Weise kann ein vereinzelter Dokumentkörper mit verringertem Aufwand und kostengünstig ohne zusätzliche mechanische oder elektromechanische Transportvorrichtungen in die Dokumentaufnahme der Individualisierungseinheit transportiert werden.

Dokumentkörper können elektrostatischen Effekten unterliegen, welche insbesondere auf den flächig ausgebildeten Seiten der Dokumentkörper größere Auswirkungen haben können. Um den Transport eines vereinzelten Dokumentkörpers zwischen der Vereinzelungseinheit und der Individualisierungseinheit immer gleich auszugestalten, sollte aber eine möglichst geringe Wechselwirkung zwischen dem vereinzelten Dokumentkörper und der Transportfläche auftreten. Deshalb ist in einer vorteilhaften Ausführungsform vorgesehen, dass die Transportfläche eine antistatische Beschichtung aufweist. Die antistatische Beschichtung sorgt dafür, dass ein Transport der vereinzelten Dokumentkörper entlang der Gleitbahn auf der Transportfläche lediglich abhängig von der Gewichtskraft erfolgt. Ein Bremseffekt oder sogar ein Anhalten eines vereinzelten Dokumentkörpers kann auf diese Weise unterbunden werden. Ferner kann auf diese Weise auch verhindert werden, dass in das Dokument eingebrachte elektronische Bauteile, welche sensitiv auf elektrostatische Entladungen sind (Electrostatically Sensitive Devices, ESD), Schaden nehmen, beispielsweise auf Grund einer solchen elektrostatischen Entladung, welche während eines Transportes auftreten könnte. Die antistatische Beschichtung wird mit Hilfe von leitenden oder nicht leitenden Antistatika ausgebildet, welche in die Transportfläche eingebracht oder auf die Transportfläche aufgebracht werden.

Die Individualisierungseinheit kann beispielsweise eine Abtrenneinheit aufweisen, welche aus einem in dem Magazin vorgehaltenen Stapel von Dokumentkörpern einen einzelnen Dokumentkörper abtrennt. Dies erfolgt beispielsweise über zwei zylinderförmige Vereinzelungswellen, welche jeweils mit einer längs der Zylinderform verlaufenden Nut versehen sind. Die Vereinzelungswellen greifen mittels ihrer Nuten den untersten Dokumentkörper des Stapels und trennen diesen durch eine zueinander gegenläufige Rotationsbewegung um die Zylinderachsen nach unten hin vom Stapel ab.

Es kann beim Abtrennen eines Dokumentkörpers aus dem Stapel manchmal vorkommen, dass mehr als ein Dokumentkörper aus dem Stapel abgetrennt wird, beispielsweise weil die Vereinzelungswellen verschlissen oder verdreckt sind, so dass ein gezieltes Eingreifen zwischen zwei Dokumentkörper des Stapels fehlschlägt. Statische Anziehungseffekte zwischen zwei benachbarten Dokumentkörpern können ein fehlerhaftes Abtrennen hierbei begünstigen. Vorzugsweise wird ein fehlerhaftes Abtrennen deshalb von der Abtrenneinheit erkannt.

Es kann in ungünstigen Fällen somit vorkommen, dass die Abtrenneinheit zwei aneinander haftende Dokumentkörper der Ausgabeeinheit zuführt. Um den Transport von zwei nicht erfolgreich abgetrennten Dokumentkörpern in die Dokumentaufnahme zu verhindern, ist in einer weiteren Ausführungsform deshalb vorgesehen, dass die Ausgabeeinheit an einer Übergabeposition von der Vereinzelungseinheit zur Individualisierungseinheit eine Arretiereinheit zum gesteuerten Arretieren und Freigeben eines vereinzelten Dokumentkörpers aufweist. Dies ermöglicht es, die Dokumente vor einem Transport zu der Dokumentaufnahme aufzuhalten und nur gezielt für einen Transport in die Dokumentaufnahme freizugeben. Die Vereinzelungseinheit sorgt somit dafür, dass immer nur ein einziger Dokumentkörper ausgegeben und der Individualisierungseinheit zugeführt wird.

Ferner ermöglicht es die Arretiereinheit, ein vereinzeltes Dokument bereits für eine Individualisierung bereitzuhalten, wenn die Dokumentaufnahme noch mit einem Dokumentkörper, welcher gerade individualisiert wird, belegt ist. Dies ermöglicht insbesondere eine gezielte Prozesssteuerung und somit auch eine Enttaktung der Vereinzelung von der Individualisierung. Dies ist insbesondere von Vorteil, wenn das Individualisieren in der Individualisierungseinheit bei unterschiedlichen Dokumentkörpern unterschiedlich lange dauert, beispielsweise weil zum Individualisieren eine unterschiedlich große Informationsmenge auf oder in den Dokumentkörper auf- oder eingebracht werden muss.

Um einen reibungslosen Transport zu gewährleisten, ist es von Vorteil, wenn die Transportfläche keinerlei Vertiefungen oder Erhebungen aufweist. Erhebungen würden das Gleiten eines vereinzelten Dokumentkörpers behindern. Vertiefungen könnten dafür sorgen, dass eine Kante an einer nach vorne gerichteten Seite des Dokumentkörpers, welche der Gleitrichtung zugewandt ist, an einer entgegen gerichteten Seitenwand der Vertiefung hängenbleibt, oder ein Transport zumindest behindert wird. Dies kann noch begünstigt werden, wenn der Dokumentkörper nach unten hin eine durch die Gewichtkraft hervorgerufene Wölbung aufweist. Insbesondere ist bei einer Ausführungsform deshalb vorgesehen, dass die Arretiereinheit seitlich der Gleitbahn angeordnet ist und zum Arretieren seitlich in die Gleitbahn derart eingreift, dass ein auf der Gleitbahn gleitender Dokumentkörper durch den Eingriff in seiner Bewegung durch Kraftschluss oder Formschluss arretiert wird. Dies hat den Vorteil, dass die Gleitbahn nicht durch Erhebungen oder Vertiefungen unterbrochen werden muss, um die Arretiereinheit unterzubringen.

Insbesondere ist in einer Ausführungsform vorgesehen, dass die Arretiereinheit einen Elektromagneten mit einem bewegbaren Anker umfasst. Dies ermöglicht eine gezielte und einfache Steuerung des Transports des vereinzelten Dokumentkörpers. Hierbei sind der Elektromagnet und der bewegbare Anker beispielsweise derart ausgebildet, dass der bewegbare Anker im spannungs- bzw. stromlosen Zustand ausgefahren ist, in die Gleitbahn eingreift und einen Dokumentkörper somit in seiner Gleitbewegung stoppt. Soll der vereinzelte Dokumentkörper nach dem Stoppen durch den bewegbaren Anker wieder in Bewegung gesetzt werden oder der vereinzelte Dokumentkörper nicht gestoppt werden, so wird eine Spannung bzw. ein Strom an den Elektromagneten angelegt, wodurch der bewegbare Anker zurückgezogen wird und die Gleitbahn hierdurch freigegeben wird. Der vereinzelte Dokumentkörper gleitet dann schwerkraftgetrieben aus der Vereinzelungseinheit in die Dokumentaufnahme der Individualisierungseinheit. Prinzipiell können der Elektromagnet und der bewegbare Anker aber auch genau umgekehrt betrieben werden, das heißt im spannungs- bzw. stromlosen Zustand ist der bewegbare Anker nicht in die Gleitbahn geschoben, wohingegen eine an den Elektromagneten angelegte Spannung bzw. ein angelegter Strom bewirkt, dass der bewegbare Anker in die Gleitbahn geschoben wird.

Sollten beim Vereinzeln zwei Dokumentenkörper aneinander haften, so sollte verhindert werden, dass beide Dokumentkörper in die Dokumentaufnahme gelangen. In einer Ausführungsform ist hierzu vorgesehen, dass die Ausgabeeinheit eine Blockiereinrichtung aufweist, die zusammen mit der Transportfläche einen Spalt bildet, dessen Spaltbreite kleiner als eine doppelte Dicke der Dokumentkörper ist. Eine solche Blockiereinrichtung mit einem solchen Spalt sorgt dafür, dass stets nur ein einziger Dokumentkörper den Spalt passieren kann. Falls zwei Dokumentkörper so stark aneinander haften, dass die kinetische und potentielle Energie nicht ausreicht, die beiden Dokumentkörper an dem Spalt zu trennen, werden die beiden aneinander haftenden Dokumentkörper an der Blockiereinrichtung gestoppt. Somit kann erfolgreich verhindert werden, dass zwei Dokumentkörper (oder mehr) gleichzeitig in die Dokumentaufnahme der Individualisierungseinheit gelangen.

Wurden zwei aneinanderhaftende Dokumentkörper an der Blockiereinrichtung getrennt, so kann vorgesehen sein, dass die Arretiereinheit nach dem Passieren des unteren Dokumentkörpers durch den Spalt den nachfolgenden oberen Dokumentkörper gezielt arretiert.

Wurden zwei aneinander haftende Dokumentkörper vor der Blockiereinrichtung gestoppt, so sollten diese an Ort und Stelle voneinander getrennt werden können, damit ein Produktionsprozess nicht unterbrochen werden muss. In einer weiteren Ausführungsform kann deshalb vorgesehen sein, dass die Ausgabeeinheit ein Reibrad aufweist, über welches einem Dokumentkörper ein zusätzlicher Impuls verliehen werden kann. Ist das Reibrad beispielsweise in die Transportfläche derart eingelassen, dass sein äußerer Umfang in die Gleitbahn eingreifen kann, so können zwei aneinander haftende Dokumentkörper vor oder an der Blockiereinrichtung getrennt werden, indem das Reibrad dem unteren der beiden aneinander haftenden Dokumentkörper einen Impuls verleiht. Der untere Dokumentkörper wird mittels des zusätzlichen Impulses durch den Spalt der Blockiereinrichtung geschoben, während der obere der beiden Dokumentkörper durch die Blockiereinrichtung in seiner Bewegung blockiert wird. Hierdurch werden die aneinander haftenden Dokumentkörper voneinander getrennt.

Auch ohne die Blockiereinrichtung kann das Reibrad dazu dienen, eine Gleitbewegung von vereinzelten Dokumentkörpern zu beeinflussen, insbesondere den Dokumentkörpern einen zusätzlichen Impuls zu verleihen, so dass ein Transport beschleunigt werden kann.

Um den schwerkraftgetriebenen Transport in jedem Falle zu gewährleisten, insbesondere auch, wenn ein vereinzelter Dokumentkörper beispielsweise an einer Arretiereinheit arretiert und anschließend wieder freigegeben wurde, muss ein vereinzelter Dokumentkörper sich jederzeit ausschließlich schwerkraftgetrieben wieder in Bewegung setzen können. Insbesondere ist deshalb bei einer Ausführungsform vorgesehen, dass eine Neigung der Transportfläche derart gewählt ist, dass eine Haftreibung eines vereinzelten Dokumentkörpers auf der Transportfläche kleiner als eine Gewichtskraft des Dokumentkörpers ist.

In einer weiteren Ausführungsform ist vorgesehen, dass die Individualisierungseinheit eine weitere Arretiereinheit zum gesteuerten Arretieren und Freigeben eines vereinzelten Dokumentkörpers an der Individualisierungsposition der Dokumentaufnahme aufweist. Dies ermöglicht ein gesteuertes Arretieren des vereinzelten Dokumentkörpers in der Individualisierungsposition der Dokumentaufnahme und ein gesteuertes Freigeben des individualisierten Dokumentkörpers im Anschluss an den Individualisierungsschritt.

In einer weiteren Ausführungsform ist vorgesehen, dass die weitere Arretiereinheit seitlich der Gleitbahn des Dokumentkörpers angeordnet ist und zum Arretieren seitlich in die Gleitbahn derart eingreift, dass ein auf der Gleitbahn gleitender Dokumentkörper durch den Eingriff in seiner Bewegung durch Kraftschluss oder Formschluss arretiert wird. Dies hat den Vorteil, dass die Gleitbahn nicht durch Erhebungen oder Vertiefungen unterbrochen werden muss, um die Arretiereinheit unterzubringen.

Insbesondere ist bei einer Ausführungsform vorgesehen, dass die weitere Arretiereinheit einen Elektromagneten mit einem bewegbaren Anker umfasst.

In einer vorteilhaften Ausführungsform ist vorgesehen, dass unterhalb der Dokumentaufnahme im Bereich der Individualisierungsposition, beispielsweise zwischen der Arretiereinheit und der weiteren Arretiereinheit, ein RFID-Transceiver angeordnet ist, wobei die Individualisierungseinheit derart ausgebildet ist, zum Individualisieren des Dokumentkörpers einen in dem Dokumentkörper verbauten RFID-Chip zu individualisieren. Insbesondere sollen hierdurch Dokumentkörper individualisiert werden können, welche eine Funktionalität von kontaktlosen Smartcards gemäß ISO/IEC 10536 (close coupling Smartcards, mit einer Kommunikationsreichweite bis 1 cm), ISO/IEC 14443 (proximity coupling Smartcards, mit einer Kommunikationsreichweite bis 10 cm) und ISO/IEC 15693 (vicinity Smartcards, mit einer Kommunikationsreichweite bis 1 m) oder anderen entsprechenden Standards aufweisen

Natürlich kann der Individualisierungsschritt auch anders ausgebildet sein, beispielsweise als Laserpersonalisierung oder Bedruckung etc. Insbesondere können auch mehrere unterschiedliche Verfahren zum Individualisieren in der Individualisierungseinheit eingesetzt werden. Auch eine Erfassung von bereits auf den Dokumentkörpern befindlichen Informationen, beispielsweise eine werksseitig eingebrachte Seriennummer etc. kann mittels einer Kamera und anschließender Texterkennung (optical character recognition, OCR) ausgelesen werden und einer Individualisierung zu Grunde gelegt werden. Hierbei kann beispielsweise vorgesehen sein, dass die von der Kamera erfasste Seriennummer dazu genutzt wird, mit dieser Seriennummer verknüpfte Individualisierungsinformationen aus einer Datenbank abzurufen und diese dann beim Individualisieren zu verwenden.

Von besonderem Vorteil ist es, wenn ein in der Individualisierungseinheit individualisierter Dokumentkörper die Dokumentaufnahme ebenfalls schwerkraftgetrieben wieder verlassen kann und auf diese Weise einem weiteren Prozessschritt zugeführt werden kann. In einer weiteren Ausführungsform ist deshalb vorgesehen, dass die Vorrichtung eine weitere Individualisierungseinheit aufweist, wobei die Individualisierungseinheit ferner derart ausgebildet ist, dass ein vereinzelter Dokumentkörper beim Verlassen der Individualisierungseinheit schwerkraftgetrieben geneigt gegenüber einer Horizontalen und Vertikalen ausgegeben und in eine Dokumentaufnahme der weiteren Individualisierungseinheit transportiert wird.

Eine weitere Individualisierungseinheit kann beispielsweise eine optische Individualisierung durchführen. Eine solche weitere Individualisierungseinheit kann beispielsweise ein Changeable Laser Image (CLI) oder ein Multiple Laser Image (MLI) in den Dokumentkörper einbringen. Auch eine Bedruckung des Dokumentkörpers kann über eine weitere Individualisierungseinheit vorgesehen sein.

Es kann ferner vorgesehen sein, dass der Dokumentkörper einer Vielzahl von weiteren Individualisierungseinheiten nacheinander durchläuft und jeweils schwerkraftgetrieben geneigt gegenüber einer Horizontalen und Vertikalen zu diesen transportiert wird.

Zusätzlich kann die Vorrichtung eine Sammeleinrichtung mit einem Gutfach und einem Schlechtfach aufweisen, in dem die fertig individualisierten Dokumentkörper gesammelt werden. Erfolgreich individualisierte Dokumentkörper werden hierbei in dem Gutfach gesammelt, fehlerhaft individualisierte Dokumentkörper hingegen in dem Schlechtfach.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Individualisieren von Dokumentkörpern;
- Fig. 2: eine schematische Darstellung der in Fig. 1 gezeigten Ausführungsform der Vorrichtung zum Individualisieren von Dokumentkörpern, wobei die Vorrichtung teilweise geöffnet dargestellt ist.

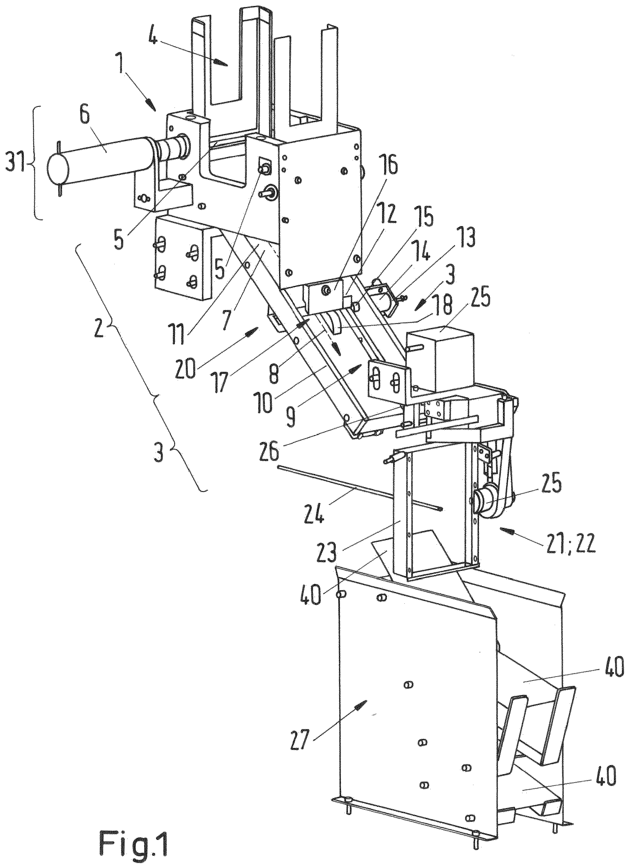

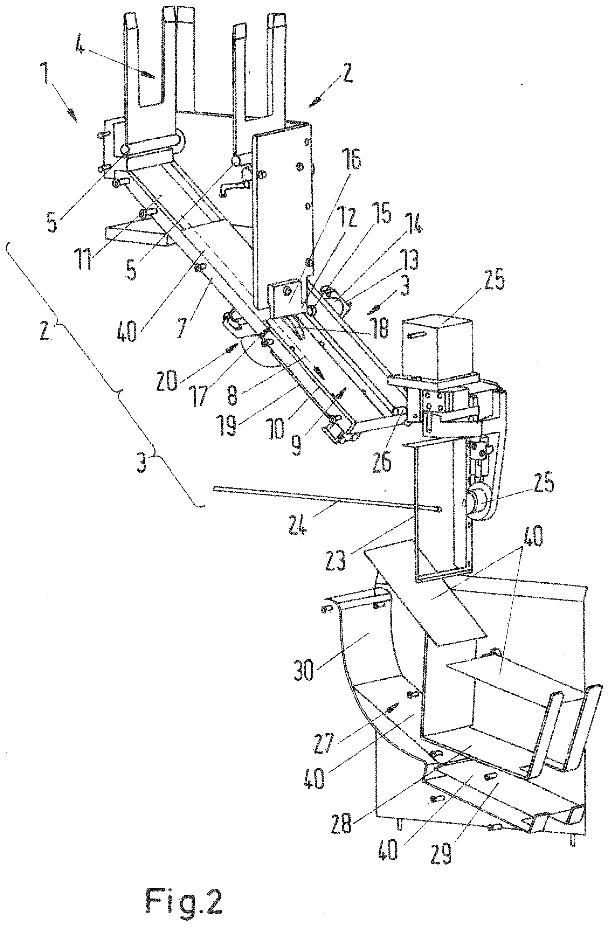

In der Fig. 1 und der Fig. 2 sind schematische Darstellungen einer Ausführungsform der Vorrichtung 1 zum Individualisieren von Dokumentkörpern 40 gezeigt. Hierbei zeigen die Fig. 1 und die Fig. 2 dieselbe Ausführungsform, jedoch ist die Ausführungsform in der Fig. 2 zur besseren Darstellbarkeit teilweise geöffnet dargestellt. Gleiche Bezugszeichen bezeichnen hierbei gleiche Bestandteile.

Die Vorrichtung 1 umfasst eine Vereinzelungseinheit 2 und eine Individualisierungseinheit 3. Die Vereinzelungseinheit 2 umfasst eine Abtrenneinheit 31. Oberhalb der Abtrenneinheit 31 ist ein Magazin 4 angeordnet, in dem eine Vielzahl von Dokumentenkörpern 40 vorgehalten wird. Der besseren Darstellbarkeit halber sind in dem Magazin 4 vorgehaltene Dokumentkörper 40 nicht gezeigt. Die Abtrenneinheit 31 weist zwei Vereinzelungswellen 5 unterhalb des Magazins 4 auf, welche an zwei gegenüberliegenden Seiten eines untersten Dokumentkörpers 40, welcher in dem Magazin 4 vorgehalten wird, angreifen. Mit Hilfe der Vereinzelungswellen 5 ist es möglich, einen einzelnen Dokumentkörper 40 aus der Vielzahl von in dem Magazin 4 vorgehaltenen Dokumentkörpern 40 abzutrennen und zu vereinzeln. Die Vereinzelungswellen 5 werden beispielsweise über eine gesteuerte, elektromechanische Antriebseinrichtung 6 angetrieben.

Die Vereinzelungseinheit 2 weist eine Ausgabeeinheit 20 auf, welche derart ausgebildet ist, vereinzelte Dokumentkörper 40 geneigt auszugeben. Nachdem der Dokumentkörper 40 von der Abtrenneinheit 31 gegriffen und aus der Vielzahl abgetrennt wurde, fällt dieser schwerkraftgetrieben auf eine Transportfläche 7 der Ausgabeeinheit 20. Die Transportfläche 7 ist als geneigte Ebene ausgebildet. Eine Neigung der Transportfläche 7 ist hierbei insbesondere derart gewählt, dass eine Haftreibung eines vereinzelten Dokumentkörpers 40 auf der Transportfläche 7 kleiner als eine Gewichtskraft des Dokumentkörpers 40 ist. Der Dokumentkörper 40 gleitet dann schwerkraftgetrieben entlang einer Gleitbahn 8 in eine Individualisierungsposition 9 einer Dokumentenaufnahme 10. Es ist somit möglich, einen vereinzelten Dokumentkörper 40 ohne zusätzliche mechanische oder elektromechanische Antriebe von dem Magazin 4 in die Dokumentaufnahme 10 zu transportieren. Dies ermöglicht einen sehr viel einfacheren Aufbau der Vorrichtung 1, welcher Material, Kosten und Aufwand spart. Insbesondere reduziert sich hierdurch auch ein Wartungsaufwand, da insgesamt weniger bewegliche und angetriebene Teile verbaut und gewartet werden müssen.

Insbesondere sind die Vereinzelungseinheit 2 und die Individualisierungseinheit 3 integral miteinander verbunden. Dies wird über die Transportfläche 7 erreicht, welche entsprechend als geneigte Ebene ausgebildet und in Bezug auf die Vereinzelungseinheit 2 und die Individualisierungseinheit 3 angeordnet ist. Die geneigte Ebene kann beispielsweise um einen Winkel von 45° gegenüber der Horizontalen bzw. der Vertikalen geneigt sein. Die Vereinzelungseinheit 2 und die Individualisierungseinheit 3 weisen somit Bestandteile auf, die einstückig ausgebildet sind und sowohl in der Vereinzelungseinheit 2 als auch in der Individualisierungseinheit 3 einen technischen Zweck erfüllen und deshalb beiden Einheiten 2, 3 zuzuordnen sind. Insbesondere wird die integrale Verbindung erreicht, dass der Transport eines Dokumentkörpers 40 verbessert durchgeführt werden kann, weil der Dokumentkörper 40 besser ausgerichtet ist und es zu keiner Verkantung etc. kommt.

In einer bevorzugten Ausführungsform ist die Transportfläche 7 mit einer antistatischen Beschichtung 11 versehen. Dies ermöglicht einen besonders guten Transport eines vereinzelten Dokumentkörpers 40 entlang der Gleitbahn 8 in die Dokumentaufnahme 10.

Es kann vorgesehen sein, dass die Ausgabeeinheit 20 an einer Übergabeposition 12 von der Vereinzelungseinheit 2 zur Individualisierungseinheit 3 eine Arretiereinheit 13 zum gesteuerten Arretieren und Freigeben eines vereinzelten Dokumentkörpers 40 aufweist.
Die Arretiereinheit 13 ermöglicht es, die Bewegung eines vereinzelten Dokumentkörpers 40 gesteuert zu stoppen und den vereinzelten Dokumentkörper 40 vor der Dokumentaufnahme 10 zu arretieren. Der arretierte, vereinzelte Dokumentkörper 40 kann dann gezielt wieder freigegeben werden. Nach dem Freigeben gleitet der vereinzelte Dokumentkörper 40 entlang der Gleitbahn 8 auf der Transportfläche 7 weiter an die Individualisierungsposition 9 der Dokumentaufnahme 10. Die Arretiereinheit 13 umfasst zum Arretieren und Freigeben der Gleitbahn 8 beispielsweise einen steuerbaren Elektromagneten 14 und einen Anker 15, welcher zum Arretieren seitlich in die Gleitbahn 8 eingreift und eine Bewegung eines vereinzelten Dokumentkörpers 40 über die Übergabeposition 12 hinaus unterbindet.

Ferner kann die Ausgabeeinheit 20 eine Blockiereinrichtung 16 aufweisen. Die Blockiereinrichtung 16 bildet zusammen mit der Transportfläche 7 einen Spalt 17, dessen Spaltbreite kleiner als eine doppelte Dicke der Dokumentkörper 40 ist. Dies verhindert, dass mehr als ein Dokumentkörper 40 in die Dokumentaufnahme 10 gelangen kann. Wurden auf Grund einer fehlerhaften Vereinzelung in der Vereinzelungseinheit 2 beispielsweise zwei Dokumentkörper 40 aus der Vielzahl abgetrennt, und haften zwei Dokumentkörper 40 aneinander, so gleitet der Verbund aus den beiden Dokumentkörpern 40 bis zu der Blockiereinrichtung 16, wird dort jedoch gestoppt, da die Spaltbreite des Spalt 17 zu schmal ist, als dass beide Dokumentkörper 40 gleichzeitig diesen passieren könnten. Insbesondere kann vorgesehen sein, dass die Spaltbreite einstellbar ist, so dass die Vorrichtung 1 mit Dokumentkörpern 40 unterschiedlicher Dicke betrieben werden kann. Hierzu kann beispielsweise eine Stellschraube vorgesehen sein, mit der die Spaltbreite justiert werden kann.

Es kann darüber hinaus vorgesehen sein, dass die Ausgabeeinheit 20 ein Reibrad 18 aufweist, über welches einem Dokumentkörper 40 ein zusätzlicher Impuls verliehen werden kann. In der gezeigten Ausführungsform der Vorrichtung 1 ist das Reibrad 18 unterhalb der Blockiereinrichtung 16 ausgebildet, so dass dort im Falle einer fehlerhaften Vereinzelung aneinander haftender Dokumentkörper 40, welche durch die Blockiereinrichtung 16 an der Übergabeposition 12 gestoppt werden, voneinander getrennt werden können. Hierzu verleiht das Reibrad 18 einem unten liegenden Dokumentkörper 40 in Richtung der Dokumentaufnahme 10 einen Impuls, wodurch sich dieser von dem oben liegenden Dokumentkörper 40 trennen lässt und durch den Spalt 17 hindurch in die Dokumentaufnahme 10 gleitet.

In der Dokumentaufnahme 10 kann der vereinzelte Dokumentkörper 40 individualisiert werden. Hierzu weist die Individualisierungseinheit 3 beispielsweise unterhalb der Dokumentaufnahme 10 im Bereich der Individualisierungsposition 9 einen RFID-Transceiver 19 auf. Die Individualisierungseinheit 3 nutzt den RFID-Transceiver 19, um einen in einem vereinzelten Dokumentkörper 40 angeordneten RFID-Chip zu individualisieren, beispielsweise indem eine Individualisierungsinformation in den RFID-Chip geladen wird. Eine solche Individualisierungsinformation kann beispielsweise eine Seriennummer, persönliche Daten (Name, Geburtsdatum, Geburtsort etc.) oder ein individueller Zugangs- oder Zugriffscode etc. sein.

Es kann hierbei vorgesehen sein, dass vor dem Individualisieren eine bereits auf dem Dokumentkörper 40 vorhandene Information ausgelesen wird. Eine solche Information, z.B. eine Seriennummer, kann beispielsweise mittels einer Kamera (nicht gezeigt), welche oberhalb der Dokumentaufnahme 10 angeordnet ist, erfasst werden. Auf Grundlage der erfassten Information kann dann in einer Datenbank eine zugehörige Individualisierungsinformation abgefragt werden, mit der der Dokumentkörper 40 anschließend individualisiert wird.

Unterhalb der Individualisierungseinheit 3 kann eine weitere Individualisierungseinheit 21 vorgesehen sein. In der gezeigten Ausführungsform ist eine solche weitere Individualisierungseinheit 21 beispielsweise eine Laserindividualisierungseinheit 22, mit der ein Dokumentkörper 40 mittels eines Lasers 24 individualisiert werden kann, beispielsweise, indem eine Information mittels einer Lasergravur auf eine lasersensitive Schicht des Dokumentkörpers 40 geschrieben wird. Hierbei werden insbesondere Bereiche in der lasersensitiven Schicht durch einen Energieeintrag mittels des Lasers 24 geschwärzt, so dass ein Kontrast erzeugt wird. Auf diese Weise können Zeichen oder Graphiken in die lasersensitive Schicht geschrieben werden, welche anschließend optisch erfassbar sind.

Ein Dokumentkörper, der sich in der Dokumentaufnahme 10 der Individualisierungseinheit 3 befindet und in dieser bereits individualisiert wurde, beispielsweise, indem der RFID-Chip in dem Dokumentkörper 40 individualisiert wurde, wird dann schwerkraftgetrieben in eine Dokumentaufnahme 23 der weiteren Individualisierungseinheit 21 transportiert. In dieser Ausführungsform weist die Dokumentaufnahme 23 der weiteren Individualisierungseinheit 21 jeweils eine Schiene, welche an den beiden Längsseiten des Dokumentkörpers 40 angreift, auf. Die Dokumentaufnahme 23 der weiteren Individualisierungseinheit 21 kann dann um zwei Achsen mittels hierfür vorgesehenen Schrittmotoren 25 rotiert werden, so dass der Laser 24 aus unterschiedlichen Richtungen in die lasersensitive Schicht fokussiert werden kann. Insbesondere ist diese weitere Individualisierungseinheit 21 in der gezeigten Ausführungsform dazu geeignet, ein Multiple Laser Image (MLI) oder ein Changeable Laser Image (CLI) in den Dokumentkörper 40 einzubringen.

In einer Ausführungsform ist ferner vorgesehen, dass die Individualisierungseinheit 3 eine weitere Arretiereinheit 26 zum gesteuerten Arretieren und Freigeben eines vereinzelten Dokumentkörpers 40 an der Individualisierungsposition 9 der Dokumentaufnahme 10 aufweist. Es kann hierbei insbesondere vorgesehen sein, dass die weitere Arretiereinheit 26, wie auch die Arretiereinheit 13, einen Elektromagneten und einen Anker (nicht gezeigt) aufweist. Der Elektromagnet kann mittels einer Steuerspannung bzw. mittels eines Steuerstroms gesteuert werden und schiebt je nach Steuerspannung/- strom den Anker in die Gleitbahn 8. Ein vereinzelter Dokumentkörper 40 wird dann durch den Anker an der Individualisierungsposition 9 arretiert und wieder freigegeben. Hierdurch kann der vereinzelte Dokumentkörper 40 gesteuert von der Individualisierungseinheit 3 zur weiteren Individualisierungseinheit 21 transportiert werden.

Insbesondere kann in einer Ausführungsform vorgesehen sein, dass ein in der weiteren Individualisierungseinheit 21 individualisierter Dokumentkörper 40 nach dem Individualisieren in einer Sammeleinrichtung 27, zusammen mit weiteren bereits individualisierten Dokumentkörpern 40, gesammelt wird. Insbesondere kann vorgesehen sein, dass die Sammeleinrichtung 27 ein Gutfach 28 und ein Schlechtfach 29 aufweist. Ergibt eine Qualitätskontrolle oder ein anderer Überwachungsschritt während des Individualisierens, dass ein vereinzelter Dokumentkörper 40 nicht erfolgreich individualisiert werden konnte, so wird der Dokumentkörper 40 von der weiteren Individualisierungseinheit 21 über einem Schlechtfachkanal 30, der zu dem Schlechtfach 29 hinführt, abgeworfen. Der abgeworfene Dokumentkörper 40 gleitet dann durch den Schlechtfachkanal 30 hindurch in das Schlechtfach 29 hinein. Wurde ein vereinzelter Dokumentkörper 40 hingegen erfolgreich individualisiert, so wird er von der weiteren Individualisierungseinheit 21 über dem Gutfach 28 abgeworfen, so dass der abgeworfene Dokumentkörper 40 in dieses Gutfach 28 hineingleitet. Insbesondere können die Dokumentkörper 40 vor dem Abwerfen mit einer Neigung zur Horizontalen bzw. Vertikalen versehen werden, so dass die Dokumentkörper 40 nach dem Abwerfen bereits eine Orientierung aufweisen, welche einen Transport in das Gutfach 28 bzw. das Schlechtfach 29 begünstigen. Der Vorteil einer solchen Sammeleinrichtung 27 ist, dass keinerlei weitere Transporteinrichtungen zum Sammeln der fertig individualisierten Dokumentkörper 40 notwendig sind.

Ein vereinzelter Dokumentkörper 40 kann also von dem Magazin 4 bis zum Ende der in dieser Ausführungsform gezeigten Prozesskette ausschließlich schwerkraftgetrieben transportiert werden.

Die Vorrichtung 1 ist insbesondere dazu geeignet, an dezentralen Orten bedarfsgesteuert individualisierte Sicherheitsdokumente auszubilden und bereitzustellen.

### Bezugszeichenliste

- 1: Vorrichtung
- 2: Vereinzelungseinheit
- 3: Individualisierungseinheit
- 4: Magazin
- 5: Vereinzelungswelle
- 6: Antriebseinrichtung
- 7: Transportfläche
- 8: Gleitbahn
- 9: Individualisierungsposition
- 10: Dokumentaufnahme
- 11: antistatische Beschichtung
- 12: Übergabeposition
- 13: Arretiereinheit
- 14: Elektromagnet
- 15: Anker
- 16: Blockiereinrichtung
- 17: Spalt
- 18: Reibrad
- 19: RFID-Transceiver
- 20: Ausgabeeinheit
- 21: weitere Individualisierungseinheit
- 22: Laserindividualisierungseinheit
- 23: Dokumentaufnahme
- 24: Laser
- 25: Schrittmotor
- 26: weitere Arretiereinheit
- 27: Sammeleinrichtung
- 28: Gutfach
- 29: Schlechtfach
- 30: Schlechtfachkanal
- 31: Abtrenneinheit
- 40: Dokumentkörper

## Patentansprüche

1. Vorrichtung (1) zum Individualisieren von Dokumentkörpern (40), umfassend:
eine Vereinzelungseinheit (2) zum Vereinzeln einer Vielzahl von in einem Magazin (4) vorgehaltenen Dokumentkörpern (40), und
eine Individualisierungseinheit (3) mit einer Dokumentaufnahme (10), wobei die Individualisierungseinheit (3) derart ausgebildet ist, einen Dokumentkörper (40) in einer Individualisierungsposition (9) der Dokumentaufnahme (10) zu individualisieren,
**dadurch gekennzeichnet, dass**
die Vereinzelungseinheit (2) eine Ausgabeeinheit (20) aufweist, welche derart ausgebildet ist, vereinzelte Dokumentkörper (40) geneigt auszugeben, und die Dokumentaufnahme (10) der Individualisierungseinheit (3) derart zur Ausgabeeinheit (20) positioniert ist, dass ein vereinzelt ausgegebener Dokumentkörper (40) schwerkraftgetrieben entlang einer Gleitbahn (8) an die Individualisierungsposition (9) der Dokumentaufnahme (10) der Individualisierungseinheit (3) transportiert wird.

2. Vorrichtung (1) nach Anspruch 1, **dadurch gekennzeichnet, dass** die Vereinzelungseinheit (2) und die Individualisierungseinheit (3) mindestens ein Element aufweisen, das einstückig ausgebildet ist, so dass die Vereinzelungseinheit (2) und die Individualisierungseinheit (3) integral miteinander verbunden sind.

3. Vorrichtung (1) nach Anspruch 1 oder 2, **dadurch gekennzeichnet, dass** die Ausgabeeinheit (20) zum Ausbilden der Gleitbahn (8) eine Transportfläche (7) umfasst, wobei die Transportfläche (7) als geneigte Ebene ausgebildet ist.

4. Vorrichtung (1) nach Anspruch 3, **dadurch gekennzeichnet, dass** die Transportfläche (7) eine antistatische Beschichtung (11) aufweist.

5. Vorrichtung (1) nach einem der vorangegangenen Ansprüche, **dadurch gekennzeichnet, dass** die Ausgabeeinheit (20) an einer Übergabeposition (12) von der Vereinzelungseinheit (2) zur Individualisierungseinheit (3) eine Arretiereinheit (13) zum gesteuerten Arretieren und Freigeben eines vereinzelten Dokumentkörpers (40) aufweist.

6. Vorrichtung (1) nach Anspruch 5, **dadurch gekennzeichnet, dass** die Arretiereinheit (13) seitlich der Gleitbahn (8) angeordnet ist und zum Arretieren seitlich in die Gleitbahn (8) derart eingreift, dass ein auf der Gleitbahn (8) gleitender Dokumentkörper (40) durch den Eingriff in seiner Bewegung durch Kraftschluss oder Formschluss arretiert wird.

7. Vorrichtung (1) nach Anspruch 5 oder 6, **dadurch gekennzeichnet, dass** die Arretiereinheit (13) einen Elektromagneten (14) mit einem bewegbaren Anker (15) umfasst.

8. Vorrichtung (1) nach einem der Ansprüche 3 bis 7, **dadurch gekennzeichnet, dass** die Ausgabeeinheit (20) eine Blockiereinrichtung (16) aufweist, die zusammen mit der Transportfläche (7) einen Spalt (17) bildet, dessen Spaltbreite kleiner als eine doppelte Dicke der Dokumentkörper (40) ist.

9. Vorrichtung (1) nach einem der vorangehenden Ansprüche, **dadurch gekennzeichnet, dass** die Ausgabeeinheit (20) ein Reibrad (18) aufweist, über welches einem Dokumentkörper (40) ein zusätzlicher Impuls verliehen werden kann.

10. Vorrichtung (1) nach einem der Ansprüche 3 bis 9, **dadurch gekennzeichnet, dass** eine Neigung der Transportfläche (7) derart gewählt ist, dass eine Haftreibung eines vereinzelten Dokumentkörpers (40) auf der Transportfläche (7) kleiner als eine Gewichtskraft des Dokumentkörpers (40) ist.

11. Vorrichtung (1) nach einem der vorangegangenen Ansprüche, **dadurch gekennzeichnet, dass** unterhalb der Dokumentaufnahme (10) im Bereich der Individualisierungsposition (9) ein RFID-Transceiver (19) angeordnet ist, wobei die Individualisierungseinheit (3) derart ausgebildet ist, zum Individualisieren des Dokumentkörpers (40) einen in dem Dokumentkörper (40) verbauten RFID-Chips zu individualisieren.

12. Vorrichtung (1) nach einem der vorangehenden Ansprüche, **gekennzeichnet durch** eine weitere Individualisierungseinheit (21), wobei die Individualisierungseinheit (3) ferner derart ausgebildet ist, dass ein vereinzelter Dokumentkörper (40) beim Verlassen der Individualisierungseinheit (3) schwerkraftgetrieben in eine Dokumentaufnahme (23) der weiteren Individualisierungseinheit (21) transportiert wird.

13. Vorrichtung (1) nach einem der vorangegangenen Ansprüche, **dadurch gekennzeichnet, dass** die Individualisierungseinheit (3) eine weitere Arretiereinheit (26) zum gesteuerten Arretieren und Freigeben eines vereinzelten Dokumentkörpers (40) an der Individualisierungsposition (9) der Dokumentaufnahme (10) aufweist.

14. Vorrichtung (1) nach Anspruch 13, **dadurch gekennzeichnet, dass** die weitere Arretiereinheit (26) seitlich der Gleitbahn (8) des Dokumentkörpers (40) angeordnet ist und zum Arretieren seitlich in die Gleitbahn (8) derart eingreift, dass ein auf der Gleitbahn (8) gleitender Dokumentkörper (40) durch den Eingriff in seiner Bewegung durch Kraftschluss oder Formschluss arretiert wird.

15. Vorrichtung (1) nach Anspruch 13 oder 14, **dadurch gekennzeichnet, dass** die weitere Arretiereinheit (26) einen Elektromagneten mit einem bewegbaren Anker umfasst.

## Claims

1. Apparatus (1) for individualising document bodies (40), comprising:
a separating unit (2) for separating a multiplicity of document bodies (40) stored in a magazine (4), and an individualising unit (3) having a document holder (10), wherein
the individualising unit (3) is designed to individualise a document body (40) in an individualising position (9) of the document holder (10),
**characterised in that**
the separating unit (2) has a delivery unit (20), which is designed in such a way as to deliver document bodies (40) in an inclined state, and the document holder (10) of the individualising unit (3) is positioned in relation to the delivery unit (20) such that a separately delivered document body (40) is transported under the action of gravitational force, along a sliding path (8), to the individualising position (9) of the document holder (10) of the individualising unit (3).

2. Apparatus (1) according to claim 1, **characterised in that** the separating unit (2) and the individualising unit (3) comprise at least one element which is configured as being of one piece, such that the separating unit (2) and the individualising unit (3) are integrally connected to one another.

3. Apparatus (1) according to claim 1 or 2, **characterised in that** the delivery unit (20) comprises a transport surface (7) for forming the sliding path (8), wherein the transport surface (7) is configured as an inclined plane.

4. Apparatus (1) according to claim 3, **characterised in that** the transport surface (7) comprises an antistatic coating (11).

5. Apparatus (1) according to any one of the preceding claims, **characterised in that** the delivery unit (20) comprises, at a transfer position (12) from the separating unit (2) to the individualising unit (3), an arresting unit (13) for the controlled arresting and release of a separated document body (40).

6. Apparatus (1) according to claim 5, **characterised in that** the arresting unit (13) is arranged laterally to the sliding path (8), and, for the purpose of arresting, engages laterally into the sliding path (8) in such a way that a document body (40) sliding on the sliding path (8) is arrested by the engagement in its movement, as non-positive or positive fit.

7. Apparatus (1) according to claim 5 or 6, **characterised in that** the arresting unit (13) comprises an electromagnet (14) with a movable armature (15).

8. Apparatus (1) according to any one of claims 3 to 7, **characterised in that** the delivery unit (20) comprises a blocking device (16), which, together with the transport surface (7), forms a gap (17), of which the gap width is smaller than a doubled thickness of the document bodies (40).

9. Apparatus (1) according to any one of the preceding claims, **characterised in that** the delivery unit (20) comprises a friction wheel (18), by means of which an additional thrust can be given to a document body (40).

10. Apparatus (1) according to any one of claims 3 to 9, **characterised in that** an inclination of the transport surface (7) is selected in such a way that an adherence friction of a separated document body (40) on the transport surface (7) is smaller than a weight force of the document body (40).

11. Apparatus (1) according to any one of the preceding claims, **characterised in that**, arranged beneath the document holder (10), in the region of the individualisation position (9), is an RFID transceiver (19), wherein the individualising unit (3) is designed so as to individualise an RFID chip located in the document body (40), for the purpose of individualising of the document body (40).

12. Apparatus (1) according to any one of the preceding claims, **characterised by** a further individualising unit (21), wherein the individualising unit (3) is further configured in such a way that a separated document body (40), on leaving the individualising unit (3) is transported, driven by force of gravity, into a document holder (23) of the further individualising unit (21).

13. Apparatus (1) according to any one of the preceding claims, **characterised in that** the individualising unit (3) comprises a further arresting unit (26) for the controlled arresting and release of a separated document body (40) at the individualising position (9) of the document holder (10).

14. Apparatus (1) according to claim 13, **characterised in that** the further arresting unit (26) is arranged laterally to the sliding path (8) of the document body (40), and, for the purpose of arresting, engages laterally into the sliding path (8) in such a way that a document body (40) sliding on the sliding path (8) is arrested by the engagement in its movement, as non-positive or positive fit.

15. Apparatus (1) according to claim 13 or 14, **characterised in that** the further arresting unit (26) comprises an electromagnet with a movable armature.

## Revendications

1. Dispositif (1) pour l'individualisation de corps de document (40), comprenant :
une unité de séparation (2) pour séparer une pluralité de corps de documents (40) mis à disposition dans un magasin (4), et
une unité d'individualisation (3) avec un logement de document (10), dans lequel l'unité d'individualisation (3) est réalisée de manière à individualiser un corps de document (40) dans une position d'individualisation (9) du logement de document (10),
**caractérisé en ce que**
l'unité de séparation (2) présente une unité de distribution (20) qui est réalisée de manière à distribuer de manière inclinée des corps de document (40) séparés, et le logement de document (10) de l'unité d'individualisation (3) est positionné par rapport à l'unité de distribution (20) de telle manière qu'un corps de document (40) distribué séparément soit transporté en étant entraîné par la force de gravité le long d'une glissière (8) au niveau de la position d'individualisation (9) du logement de document (10) de l'unité d'individualisation (3).

2. Dispositif (1) selon la revendication 1, **caractérisé en ce que** l'unité de séparation (2) et l'unité d'individualisation (3) présentent au moins un élément qui est réalisé d'un seul tenant de sorte que l'unité de séparation (2) et l'unité d'individualisation (3) soient reliées d'un seul tenant entre elles.

3. Dispositif (1) selon la revendication 1 ou 2, **caractérisé en ce que** l'unité de distribution (20) comporte pour la réalisation de la glissière (8) une surface de transport (7), dans lequel la surface de transport (7) est réalisée comme plan incliné.

4. Dispositif (1) selon la revendication 3, **caractérisé en ce que** la surface de transport (7) présente un revêtement antistatique (11).

5. Dispositif (1) selon l'une des revendications précédentes, **caractérisé en ce que** l'unité de distribution (20) présente au niveau d'une position de remise (12) de l'unité de séparation (2) à l'unité d'individualisation (3) une unité d'arrêt (13) pour l'arrêt et la libération commandés d'un corps de document (40) séparé.

6. Dispositif (1) selon la revendication 5, **caractérisé en ce que** l'unité d'arrêt (13) est agencée latéralement à la glissière (8) et se met en prise pour l'arrêt latéralement dans la glissière (8) de telle manière qu'un corps de document (40) coulissant sur la glissière (8) soit arrêté par la mise en prise dans son mouvement par liaison à force ou complémentarité de formes.

7. Dispositif (1) selon la revendication 5 ou 6, **caractérisé en ce que** l'unité d'arrêt (13) comporte un électroaimant (14) avec un induit mobile (15).

8. Dispositif (1) selon l'une des revendications 3 à 7, **caractérisé en ce que** l'unité de distribution (20) présente un dispositif de blocage (16) qui forme conjointement avec la surface de transport (7) une fente (17), dont la largeur de fente est inférieure à une épaisseur doublée des corps de document (40).

9. Dispositif (1) selon l'une des revendications précédentes, **caractérisé en ce que** l'unité de distribution (20) présente une roue de friction (8), par laquelle une impulsion supplémentaire peut être conférée à un corps de document (40).

10. Dispositif (1) selon l'une des revendications 3 à 9, **caractérisé en ce qu'**une inclinaison de la surface de transport (7) est choisie de telle manière qu'une friction par adhérence d'un corps de document (40) séparé sur la surface de transport (7) soit inférieure à un poids du corps de document (40).

11. Dispositif (1) selon l'une des revendications précédentes, **caractérisé en ce qu'**un émetteur-récepteur RFID (19) est agencé en dessous du logement de document (10) dans la zone de la position d'individualisation (9), dans lequel l'unité d'individualisation (3) est réalisée de manière à individualiser pour l'individualisation du corps de document (40) une puce RFID montée dans le corps de document (40).

12. Dispositif (1) selon l'une des revendications précédentes, **caractérisé par** une autre unité d'individualisation (21), dans lequel l'unité d'individualisation (3) est en outre réalisée de telle manière qu'un corps de document (40) séparé soit transporté en quittant l'unité d'individualisation (3) en étant entraîné par la force de gravité dans un logement de document (23) de l'autre unité d'individualisation (21).

13. Dispositif (1) selon l'une des revendications précédentes, **caractérisé en ce que** l'unité d'individualisation (3) présente une autre unité d'arrêt (26) pour l'arrêt et la libération commandés d'un corps de document (40) séparé au niveau de la position d'individualisation (9) du logement de document (10).

14. Dispositif (1) selon la revendication 13, **caractérisé en ce que** l'autre unité d'arrêt (26) est agencée latéralement à la glissière (8) du corps de document (40) et se met en prise pour l'arrêt latéralement dans la glissière (8) de telle manière qu'un corps de document (40) coulissant sur la glissière (8) soit arrêté par la mise en prise dans son mouvement par liaison à force ou complémentarité de formes.

15. Dispositif (1) selon la revendication 13 ou 14, **caractérisé en ce que** l'autre unité d'arrêt (26) comporte un électroaimant avec un induit mobile.
